# EUROPÄISCHE PATENTSCHRIFT

(11) **EP 0 927 207 B1**
(45) Veröffentlichungstag und Bekanntmachung des Hinweises auf die Patenterteilung: **25.04.2001**
(21) Anmeldenummer: 97919040.2
(22) Anmeldetag: 06.09.1997
(51) Int. Cl.: C08F 265/06, C04B 26/06

(54) **KUNSTSTOFFORMKÖRPER**
PLASTIC MOULDED BODY
CORPS MOULE EN MATIERE PLASTIQUE

(30) Priorität: 23.09.1996 DE 19639039
(43) Veröffentlichungstag der Anmeldung: 07.07.1999
(73) Patentinhaber: Schock & Co. GmbH, 73614 Schorndorf (DE)
(72) Erfinder: SCHOCK, Friedrich, Sen., D-73614 Schorndorf (DE); SCHOCK, Karl, D-73614 Schorndorf (DE); HIEBER, Gunter, D-73614 Schorndorf (DE); KNOSPE, Daniel, D-73614 Schorndorf (DE); SCHLIER, Horst, D-73614 Schorndorf (DE)
(74) Vertreter: Patentanwälte Bartels und Partner
(86) Internationale Anmeldenummer: EP9704835
(87) Internationale Veröffentlichungsnummer: WO9813401

(56) Entgegenhaltungen:
- EP-A- 0 786 479
- WO-A-92/03497
- DE-A- 4 304 494
- JP-A- 7 188 505
- JP-A- 9 002 857

## Beschreibung

Die Erfindung betrifft einen Kunststofformkörper, insbesondere ein Formteil wie z.B. eine Küchenspüle, ein Handwaschbecken, oder eine Arbeitsplatte oder dergleichen, umfassend eine aus einer aushärtbaren Reaktionsmasse gebildeten Polymerphase und ein darin eingelagertes partikelförmiges Füllmaterial, welches ein mit einem anorganischen Füllstoff gefülltes Harzmaterial umfaßt. Die Erfindung betrifft insbesondere Formkörper mit einem sogenannten Granitdekor.

Formteile und Platten mit Granitdekoren oder auch mit unifarbener Oberfläche werden herkömmlich nach klassischen Gießverfahren hergestellt. Dazu werden alle Bestandteile einer Gießmasse einschließlich der Füllstoffe gemischt, entlüftet und in Formen gegossen/gepumpt und polymerisiert. Bei Platten findet großtechnisch auch das kontinuierliche Belt-Cast-Verfahren Anwendung. Gießbar/pumpbar sind Gießmassen mit einer Viskosität im Bereich von 2000 bis 40000 mPa s.

Bei Acryl-(bzw. Polyester-)compositen mit Aluminiumoxidtrihydrat (ATH) als Füllstoff kann der Graniteffekt dadurch erzielt werden, daß ausgehärtete harzhaltige Strukturen wie Platten, Barren etc., zu einem Granulat feingemahlen werden und das Granulat wiederum als dekoratives Füllmaterial in der Polymerphase eingesetzt wird. Das Granulat wird je nach gewünschtem Dekor in einem hierfür ausgewählten Korngrößenbereich eingesetzt. Mit Korngrößen von 50 - 900 µm lassen sich feine, mit 900 - 2500 µm mittelgrobe, und mit > 2500 µm grobe Granitdekore realisieren.

Da bei Granitdekoren häufig dunkle Farbtöne realisiert werden, ist die Reduzierung des sogenannten water whitening, insbesondere bei Formteilen, ein zentrales Problem. Durch den dauerhaften Einfluß heißen und kalten Wassers über längere Zeiträume, kommt es zu einer optisch unschönen Aufhellung, dem water whitening. Nun ist es bekannt, daß durch Einsatz von Füllstoffen (beispielsweise ATH), die mit Silanen beschichtet sind, das water whitening deutlich reduziert werden kann. Als Konsequenz verändern sich aber auch die mechanischen und thermischen Eigenschaften des Formteilmaterials, so daß die Formteile im Heiß-Kalt-Zyklus (Zyklus: 3 min heißes Wasser mit 87 °C; 3 min kaltes Wasser mit 21 °C) bereits nach wenigen 100 Zyklen kleine Haarrisse bekommen oder sogar ganz reißen, so daß sie ausgetauscht werden müssen.

Eine typische Gießmassen-Rezeptur besteht in ihren Hauptkomponenten aus 40 bis 55 Gew.% (silanisiertem) ATH, 5 bis 20 Gew.% Granulat sowie 30 bis 40 Gew.% Reaktionsharz. Wird dagegen unsilanisiertes ATH verwendet, so ist das Rißverhalten im Heiß-Kalt-Zyklus zwar als positiver zu bewerten, dagegen beobachtet man eine gravierende Aufhellung (water whitening) an den wasserumspülten Bereichen des Formteils.

Aus der DE 43 04 494 A1 ist eine gießbare Reaktionsmasse bekannt, in der in einer flüssigen monomeren Acrylatkomponente, die partikelförmiges anorganisches Material umfaßt, zur Modifikation der Viskosität der Gießmasse ein partikelförmiges Kunststoffmaterial zugesetzt wird, welches wiederum selbst mit einem anorganischen Füllstoff gefüllt sein kann. Diese Reaktionsmassen zeichnen sich dadurch aus, daß sie fließfähig, d. h. gießfähig und damit mit herkömmlicher Gießtechnologie verarbeitbar sind.

Aufgabe der Erfindung ist es einen Kunststofformkörper vorzuschlagen, welcher neben einer guten Resistenz gegen das water whitening eine hohe Resistenz gegen die Rißbildung in Heiß-Kalt-Zyklen aufweist.

Diese Aufgabe wird bei einem Kunststofformkörper der eingangs beschriebenen Art erfindungsgemäß dadurch gelöst, daß die Polymerphase bis zu 5 Gew.%, bezogen auf das Gewicht des Kunststofformkörpers, an losen anorganischen Zuschlagstoffpartikeln umfaßt,
daß das partikelförmige Füllmaterial in der aushärtbaren Reaktionsmasse gequollen ist, bis deren Mischung nicht mehr gießfähig ist,
daß das gefüllte Harzmaterial einen Anteil an anorganischem Füllstoff im Bereich von 50 bis 80 Gew.% mit einer mittleren Korngröße von 5 bis 100 µm aufweist, und
daß das Füllmaterial eine Korngröße im Bereich von 60 bis 8000 µm aufweist und in einem Anteil von ca. 30 bis ca. 75 Gew.% in dem Kunststofformkörper enthalten ist.

Durch die Begrenzung der anorganischen Zuschlagstoffe in der Polymerphase auf maximal 5 Gew.% des Gesamtgewichts des Formkörpers bleibt diese im wesentlichen füllstofffrei. Die Selektion des Füllmaterials nach seiner Quellbarkeit in der Reaktionsmasse bedingt die Abkehr von den bisher üblichen Herstellverfahren bei denen die Reaktionsmasse zusammen mit dem untergemischten Füllmaterial in Formen gepumpt/gegossen wurde. Die Viskosität der Mischung aus Reaktionsmasse und gequollenem Füllmaterial und gegebenfalls den anorganischen Zuschlagstoffen ist so hoch, daß die Mischung nicht mehr pumpbar oder gießbar ist.

Überraschenderweise hat sich herausgestellt, daß aber gerade durch das Quellen der Füllmaterialien in der Reaktionsmasse eine Mischung erzielbar ist, die in eine Formhälfte eingefüllt beim Schließen der Form und Beaufschlagung mit einem vorgegebenen Druck eine lunkerfreie Füllung der Formenhohlraums erzielbar ist, ohne daß es zu einer Zerstörung der Partikelstruktur des Füllmaterials kommt und dieses unbeeinträchtigt seine dekorative und/oder kontrastierende Wirkung an der Sichtseite zur Geltung bringen kann, falls dies wie beim Granitdekor gewünscht ist.
Eine weitere Ausprägung der Erfindung ist in einem Kunststoffformkörper der eingangs beschriebenen Art zu sehen, bei dem ein partikelförmiges Füllmaterial verwendet wird, welches in der Reaktionsmasse derart quellbar ist, daß eine Prüfrezeptur aus 60 Gew.% aushärtbarer Reaktionsmasse und 40 Gew.% des partikelförmigen Füllmaterials einen Quellfaktor ≥ 2 aufweist.

Teil der Erfindung ist darüber hinaus auch ein Verfahren, mit dem die zuvor beschriebenen Kunststofformkörper herstellbar sind.

Ein solches Verfahren beinhaltet die Schritte:

Herstellen einer Mischung einer aushärtbaren Reaktionsmasse zur Bildung einer Polymerphase mit einem partikelförmigen Füllmaterial und Überführung der Mischung zum Aushärten in eine Form, wobei
die aushärtbare Reaktionsmasse im wesentlichen frei von anorganischen Füllstoffen verwendet wird,
wobei als Füllmaterial ein in der Reaktionsmasse quellbares Füllmaterial, welches ein mit einem anorganischen Füllstoff gefülltes Harzmaterial umfaßt, verwendet wird,
wobei der Anteil der anorganischen Füllstoffe in dem Füllmaterial 50 bis 80 Gew.% beträgt und wobei die Partikel des anorganischen Füllstoffs eine mittlere Korngröße von ca. 5 bis 100 µm aufweisen und das Füllmaterial eine Korngröße von ca. 60 bis ca. 8000 µm aufweist und so dosiert wird, daß es in dem Kunststofformkörper mit einem Anteil von ca. 30 bis ca. 75 Gew.% enthalten ist,
wobei das Füllmaterial in der aushärtbaren Reaktionsmasse so lange quellen gelassen wird, bis die Mischung nicht mehr gießfähig ist,
wobei die Mischung zum Aushärten in eine der von in einer Presse angeordneten Formhälften gegeben, die Form geschlossen und ein vorgegebener Preßdruck auf die Form angewandt und die Mischung in der geschlossenen Form thermisch ausgehärtet wird.

Die erfindungsgemäße Vorgehensweise unterscheidet sich vom Stand der Technik sowohl in der Rezeptur als auch der Technologie.

Im Vergleich zur herkömmlichen Vorgehensweise wird auf den Einsatz von losem ATH in der Polymerphase im wesentlichen vollständig verzichtet und statt dessen ein Füllmaterial verwendet, welches ein Harzmaterial in Form eines Polymergranulats mit einem festgelegten Quellverhalten und einem abgestimmten Gehalt eines anorganischen Füllstoffs umfaßt. Als Harzkomponente kommen alle radikalisch polymerisierbaren Reaktionsharze, bevorzugt jedoch Acrylharze und Polyesterharze in Frage. Als Füllstoffe eignen sich alle mineralischen granularen und faserförmigen Materialien, aber auch alle synthetischen Granulate, bevorzugt jedoch ATH. Der Füllstoffgehalt des fertigen Kunststofformkörpers ist im Vergleich zur konventionellen Technologie mit bevorzugt 40 bis 50 Gew.% deutlich niedriger.

Durch die Quellung des Füllmaterials/Polymergranulats in der Reaktionsmasse zur Bildung der Polymerphase erhält man nicht mehr pumpfähige Mischungen, die nur noch mit einer speziellen Technologie verarbeitet werden können. Die Mischung aus Reaktionsmasse und Füllmaterial und gegebenenfalls weiteren Zuschlagstoffen wird in die eine Hälfte der offenen Form eingefüllt und durch Schließen der Form in der Formenpresse unter entsprechendem Druck nach dem Verdrängungsverfahren in die gewünschte dreidimensionale Form gebracht.

Entscheidend für das Funktionieren des gesamten erfindungsgemäßen Verfahrens ist ein ganz bestimmtes Quellverhalten des Füllmaterials/Polymergranulats sowie eine bestimmte Endviskosität der Mischung.

Das Quellverhalten des Polymergranulats ist abhängig von der Art des verwendeten Füllstoffs, dem Füllgrad, der Art des verwendeten Harzmaterials sowie dem Vernetzungsgrad im Harz. Bei der Selektion eines geeigneten Füllmaterials/Polymergranulats kann als Richtwert ein Quellfaktor mit dem Wert ≥ 2 angegeben werden, der anhand einer Prüfrezeptur von 60 Gew.% Reaktionsmasse und 40 Gew.% Füllmaterial mit dem weiter unten noch zu beschreibenden Prüfverfahren ermittelbar ist.

Wird der Quellfaktor bei dem verwendeten Füllmaterial nicht eingehalten ergibt sich häufig eine mangelnde Fließfähigkeit der Mischung und hieraus ein unbefriedigendes Ergebnis im Formgebungsschritt.

Durch die hohe Viskosität der Mischung aus Reaktionsmasse und gequollenem Füllmaterial ist das Problem der Sedimentation, insbesondere der groben Granulatkörner, vollständig eliminiert. Das heißt, es wird eine unerwünschte ungleiche Verteilung der unterschiedlichen Komponenten der Mischung im fertigen Kunststofformkörper vermieden. Demzufolge gibt es bei Platten gibt es keine Verzugsproblematik, bei Formteilen gibt es geringere innere Spannungen.

Bei Formteilen verbessert der Verzicht auf loses ATH in der Polymerphase und statt dessen einer im wesentlichen ausschließlichen Verwendung von Polymergranulat als Füllmaterial die Performance der Formteile erheblich:

Während nach dem bisherigen Stand der Technik eine befriedigende Resistenz gegen water whitening nur mit einer deutlich reduzierten Heiß-Kalt-Beständigkeit erkauft werden konnte, gelingt es nun für beide Eigenschaften eine gute Performance zu erzielen.

Durch den reduzierten Füllgrad des Kunststofformkörpers resultiert zusätzlich eine verbesserte Abrieb-, Kratz- und Fleckenfestigkeit. Durch die hohe Viskosität in der Mischung gibt es keinerlei Sedimentationsproblematik. Selbst Granitstrukturen mit Partikelgrößen von 5 mm und mehr sind ohne weiteres und ohne Einbußen in der Produktqualität realisierbar.

Der Verzicht auf loses ATH in der Polymerphase ermöglicht zudem ein klares, attraktives Dekorbild.

Bei Platten bewirkt der Verzicht auf loses ATH in der Polymerphase neben einer Verbesserung der Fleckenfestigkeit ein verbessertes Rißverhalten bei thermischer Belastung. Durch die hohe Viskosität gibt es keine Sedimentationsproblematik der groben Granulatkörner, und damit keinerlei Verzugsprobleme.

Der Verzicht auf loses ATH ermöglicht Dekore mit einem klaren, attraktiven Bild.

Die zuvor schon angesprochenen in der Polymerphase mit geringen Anteilen möglichen Zuschlagstoffe (z.B. 0,1 bis 5 Gew.%, bevorzugt ca. 2 Gew.%, jeweils bezogen auf das Gewicht des Formkörpers) können beispielsweise ein feinteiliger, hochsilanisierter, granularer oder faserförmiger Füllstoff sein, insbesondere z.B. Cristobalit-Feinstmehl mit mittleren Korngrößen im Bereich von 0,5 bis 10 µm, vorzugsweise ca. 3 µm. Der Silanisierungsgrad beträgt vorzugsweise 0,1 bis 2 %, bevorzugt ca. 0,9 Gew.% (bezogen auf das Füllstoffgewicht).

Mit solchen Zuschlagstoffen lassen sich die Tiefenwirkung des water whitening Effekts gegenüber Rezepturen, die ganz ohne Zuschlagstoffe in der Polymerphase auskommen, weiter zurückdrängen.

Die aushärtbare Reaktionsmasse wird häufig durch einen ersten Monomer/Präpolymer-Sirup gebildet, welcher bevorzugt einen Präpolymergehalt von 5 bis ca. 30 Gew.% aufweist. Solche Sirupe sind aus der Gießtechnologie an sich bekannt.

Die Viskosität des ersten Sirups und damit auch der Reaktionsmasse wird vorzugsweise im Bereich von 20 bis 300 mPas gewählt, da so eine leichte Verteilung der Reaktionsmasse unter das Füllmaterial und damit ein gleichmäßiges Quellen des Füllmaterials erreicht werden kann.

Erfahrungsgemäß eignen sich Präpolymere im ersten Sirup mit einem mittleren Molekulargewicht im Bereich von 20.000 bis 300.000 Da.

Der erste Sirup umfaßt vorzugsweise ein radikalisch polymerisierbares Monomer oder verschiedene Monomere dieses Typs und ein Präpolymer als Homo- oder Copolymer des oder der Monomeren. Besonders bevorzugt sind hier die Monomeren vom Acrylattyp.

Alternativ kann der erste Sirup auch auf einem Polyesterharz aufgebaut sein.

Der erste Sirup wird vorzugsweise einen Vernetzer in einer Menge von 0,5 bis 5 Gew.% (bezogen auf das Formkörpergewicht) enthalten, wobei der Vernetzer vorzugsweise aus der Reihe der bi- und polyfunktionalen Acrylatvernetzer ausgewählt wird. Beispiele hierfür sind die Vernetzer TRIM und EDMA.

Ferner wird dem Sirup vorzugsweise ein einstufiges oder mehrstufiges Peroxidinitiatorsystem zugegeben.
Um die Entnahme des fertig ausgehärteten Kunststofformkörper aus der Form zu erleichtern, wird dem ersten Sirup bevorzugt ein Trennmittel in einer Menge von 0,03 bis 0,3 Gew.% (bezogen auf das Formkörpergewicht) zugegeben. Als Trennmittel eignet sich insbesondere Stearinsäure.

Das Harzmaterial des Füllmaterials wird vorzugsweise unter Verwendung eines zweiten Monomer/Präpolymer-Sirups hergestellt, wobei der Präpolymeranteil bevorzugt 5 bis 30 Gew.% des Sirups ausmacht. Die Ausführungen zu den geeigneten Monomeren und Präpolymeren im Zusammenhang mit der Beschreibung des ersten Sirups gelten hier analog.

Als besonders geeignete Viskosität des zweiten Sirups hat sich ein Wert im Bereich von 20 bis 300 mPas erwiesen, nicht nur, weil dann gegebenfalls für den ersten und den zweiten Sirup auf dasselbe Material zurückgegriffen werden kann, sondern auch weil in diesem Viskositätsbereich besonders leicht eine Mischung des Sirups mit dem Füllstoff und eine vollständige Benetzung des Füllstoffpartikel erzielbar ist.

Der anorganische Füllstoff wird vorzugsweise in granularer oder faserförmiger Form verwendet. Neben einem einheitlichen Füllstoff kann auch eine Mischung verschiedener Füllstoffe verwendet werden.

Beispiele für den Füllstoff schließen silikatische Füllstoffe wie z.B. Cristobalit, Quarz oder Wollastonit ein aber auch Aluminiumoxid und ATH.

Besonders bevorzugt ist ATH, welches mit einem Silan in einer menge von 0,04 bis 1 Gew.% (auf das Gewicht des ATH bezogen) silanisiert ist.

Ebenso wie beim ersten Sirup empfehlen sich beim zweiten Sirup die Verwendung von Vernetzern, wobei die gleichen Empfehlungen wie beim ersten Sirup gelten. Über die Wahl und die Menge des zugesetzten Vernetzers läßt sich das Quellverhalten des Füllmaterials variieren und in den gewünschten Bereich bringen.

Für die Aushärtung des zweiten Sirups zur Bildung des gefüllten Harzmaterials wird vorzugsweise auf ein Initiatorsystem zurückgegriffen, welches zur schon im Zusammenhang mit dem ersten Sirup diskutiert wurde.

Als partikelförmiges Füllmaterial eignet sich nicht nur ein einziges gefülltes Harzmaterial, sondern das Füllmaterial kann auch durch eine Mischung verschiedener Harzmaterialien gebildet werden. So können beispielsweise gefüllte und ungefüllte Harzmaterialien in Mischung zum Einsatz kommen. Die verschiedenen Harzmaterialien können auch unterschiedliche Polymere beinhalten und/oder unterschiedliche Füllstoffe, wobei hierunter auch silanisierte und unsilanisierte Füllstoffe gerechnet werden. Darüber hinaus können die unterschiedlichen Harzmaterialien verschiedene Pigmente beinhalten. Ferner können die unterschiedlichen Harzmaterialien unterschiedliche Korngrößen aufweisen. Die Quellbarkeit der unterschiedlichen Harzmaterialien kann dabei selbstverständlich verschieden stark ausgeprägt sein. Wesentlich ist allerdings, daß das Füllmaterial als Ganzes das geforderte Quellverhalten zeigt.

Diese und weitere Vorteile der Erfindung werden im folgenden anhand der Beispiele noch näher erläutert.

### Herstellung des gefüllten Harzmaterials / Rezepturen

Die Eigenschaften des Granulats aus gefülltem Harzmaterial, insbesondere dessen Quellverhalten, sind abhängig von der Art des verwendeten Füllstoffs, dem Füllgrad, der Art des verwendeten Polymeren sowie dem Vernetzungsgrad im Polymer.

Für die Herstellung qualitativ hochwertiger Formteile werden bevorzugt zwei unterschiedliche Polymergranulate eingesetzt werden: eine Sorte hergestellt unter Verwendung eines unsilanisierten ATH sowie eine Sorte hergestellt unter Verwendung eines silanisierten ATH.

### Füllstoff 1 (nicht silanisiert):

Füllstoff: Cristobalit, Quarze, Al₂O₃, ATH, bevorzugt ATH Einsatzmenge (ATH): 50 - 80 Gew.%, bevorzugt 73 Gew.% mittlere Korngrößen 20 - 60 µm, bevorzugt ca. 35 - 40 µm

### Füllstoff 2 (silanisiert):

ATH mit den Spezifikationen gemäß Füllstoff 1, silanisiert unter Verwendung von 0,04 - 1 Gew.% Silan, bezogen auf das Gewicht des ATH, bevorzugt 0,2 Gew.%. Ein bevorzugtes Silan für die Silanisierung ist Methacrylsilan.

Für die Rezepturen 1 und 2 wird zur Bildung der gefüllten Harzkomponente ein radikalisch polymerisierbares Reaktionsharz verwendet, bevorzugt ein Acrylatsirup (z.B. PMMA gelöst in MMA) und mit dem Füllstoff 1 bzw. dem Füllstoff 2 in den dort angegebenen Mengen vermischt.

Die Menge des verwendeten Acrylatsirups komplementiert die oben angegebene Füllstoffmenge zu 100 Gew.% und liegt damit im Bereich von 50 bis 20 Gew.%, bevorzugt bei ca. 27 Gew.%.

Feststoffgehalt im Sirup: Präpolymer des verwendeten Monomeres in Form eines Homo- oder Copolymeren, bevorzugt PMMA-Homopolymer, mit einem mittleren Molekulargewicht von 20.000 bis 300.000 Da, bevorzugt ca. 100 000 Da. Mengenmäßig liegt der Feststoff/Präpolymergehalt bei 5 bis ca. 30 Gew.%, bezogen auf das Gewicht des Sirup, bevorzugt bei ca. 15 Gew.%.

Bevorzugt weist der Sirup eine Viskosität von 20 bis ca. 300 mPas, bevorzugt von ca. 40 mPas auf.

Bei beiden Rezepturen wird ein Vernetzer, wie z.B. TRIM, EDMA oder dgl., bevorzugt TRIM, in einer Menge von 0,5 bis 5 Gew.%, bevorzugt von ca. 1 Gew.%, jeweils bezogen auf das Gewicht des Formkörpers, verwendet.

Bei beiden Rezepturen wird zur Initiierung der Aushärtung auf ein Peroxidinitiatorsystem zurückgegriffen und thermisch initiiert.

Von den sich anbietenden 1-, 2-, oder 3-stufigen Systemen wird bevorzugt das 2-stufige verwendet (Gew.% auf das Formkörpergewicht bezogen):

| | | | |
|---|---|---|---|
| 1. Stufe | 0,05 - 0,2 % | bevorzugt BCHPC | 0,1 Gew.% |
| 2. Stufe | 0,1 - 0,4 % | bevorzugt LP | 0,15 Gew.%; |

und falls ein 3-stufiges System zum Einsatz kommen soll:

| | | | |
|---|---|---|---|
| 3. Stufe | 0,05 - 0,2 % | bevorzugt TBPB | 0,1 Gew.%. |

Weitere bevorzugte Additive für beide Rezepturen sind:

Trennmittel, bevorzugt Stearinsäure, in einer Menge von 0,05 bis 0,3 Gew.%, bezogen auf das Gewicht des Formkörpers, bevorzugt 0,1 Gew.%.

Pigmente, je nach Farb- und/oder Kontrastwunsch.

### Mischen und Gießen:

Die flüssigen Komponenten für den Sirup werden gemischt; der Füllstoff zugegeben, gemischt, die Masse entgast und zu Platten gegossen. Die Aushärtung wird thermisch initiert bei einer Formentemperatur von 80 bis 120 °C, bevorzugt ca. 90 °C.

### Mahlen:

Nach einer Grobzerkleinerung, z.B. Brechen mit einem Walzenbrecher, der oben beschriebenen Platten auf eine Korngröße von ca. 10 bis 70 mm erfolgt die Feinzerkleinerung auf die endgültig gewünschte Korngröße. Anschließend werden die gewünschten Kornfraktionen durch Sieben aufgetrennt, wobei vor allem Feinstanteile in dem erhaltenen Granulat eliminiert werden, da sie unerwünscht sind.

### Bestimmung des Quellverhaltens des Polymergranulats

Das entscheidende Kriterium für das erfindungsgemäße Verfahren ist das Quellverhalten des Füllmaterials in der Mischung mit der Reaktionsmasse. Dies hängt von rezeptiven Gegebenheiten aber auch von der Korngrößenverteilung sowie der Oberflächenbeschaffenheit der einzelnen Granulatkörner ab. Je nach gewünschtem Dekor sind die verschiedene Korngrößenverteilungen und Mischungen unterschiedlicher Farben erforderlich.

Zur Beurteilung, ob ein Granulat nach dem Verdrängungsverfahren verarbeitet werden kann, muß zunächst ein Prüfverfahren durchgeführt werden um den Quellfaktor zu bestimmen, welcher sich als Verhältnis eines Endviskositätswertes zu einem Anfangsviskositätswert errechnet.

### Prüfverfahren:

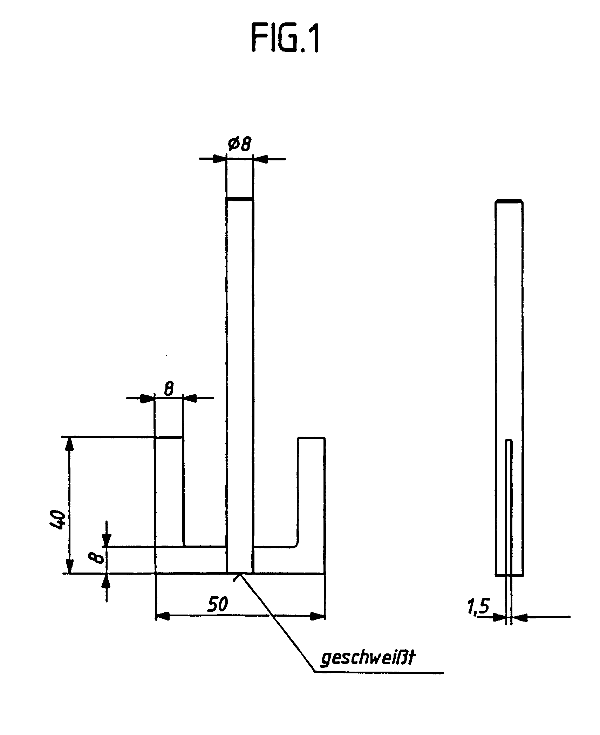

1. Prüfrezeptur:
   - 60 Gew.%: Reaktionsmasse, die der Bildung der Polymerphase dienen soll;
   - 40 Gew.%: partikelförmiges Füllmaterial, z.B. das Granulat aus den Rezepturen 1 und 2.
2. Zur Viskositätsmessung dient ein Drehmoment-Rheometer (z.B. Rheosyst 1000 Duo, der Fa. Coesfeld GmbH+Co KG, Dortmund). Als Rührwerk wird ein u-förmiger Ankerrührer eingesetzt, dessen genaue Abmessungen sich aus Fig. 1 ergeben (Durchmesser 50 mm; Höhe des Blatts 40 mm; Breite des Blatts: 8 mm). Das Drehmoment wird mittels Dehnungsstreifen gemessen. Die Prüfrezeptur wird in einen Polyethylenbecher (Durchmesser: oben 60, unten 54 mm ; Höhe 70 mm) gegeben und gemessen.
3. Nachdem sich nach einer Anfangsphase (ca. 1 min) der Viskositätsmeßwert stabilisiert hat, wird der Anfangsviskositätswert bei 40 U/min bestimmt. Anfänglich (ca. 1 min) muß das System mit einer höheren Umdrehungsgeschwindigkeit (z.B. 100 U/min) gerührt werden um eine Sedimentation des noch nicht gequollenen Granulats zu verhindern. Später wird die Drehzahl des Rührwerks auf den Meßdrehwert von 40 U/min verringert. Nach 4 min bei 40 U/min wird der Anfangsviskositätswert gemessen.Die Steuerung des Meßgeräts, sowie die Aufzeichnung der Daten erfolgt mittels PC. 25 min nach Festlegung des Anfangsviskositätswertes wird der Endviskositätswert bestimmt und der Quellfaktor ermittelt.

### Durchführung der Messung, an einem Beispiel gezeigt:

102 g Acrylsirup (PMMA in MMA, 15 %ig) werden in den Polyethylenbecher gegeben. Das Drehmomentrheometer wird mit dem in Fig.1 dargestellten Ankerrührer ausgestattet. Der Ankerrührer wird auf einen Abstand von 3 mm über dem Becherboden justiert. Das System wird auf 30°C thermostatisiert. Dann werden 68 g Granulat (vortemperiert) zugegeben und das Computerprogramm gestartet. Zuerst wird 1 min mit 100 U/min gerührt; die eigentliche zeitabhängige Messung des Drehmoments wird bei 40 U/min durchgeführt. Der Anfangsviskositätswert wird gemessen, nachdem 4 min bei 40 U/min weitergerührt wurde. Da immer unter exakt denselben Bedingungen gemessen wird, wird nicht die Viskosität sondern das Drehmoment (in Ncm) gemessen. Die Mischung beginnt zu quellen und die Viskosität steigt. Nach weiteren 25 min wird die Endviskosität gemessen und der Quellfaktor gebildet.

Durch die unterschiedlichen Rezepturen und damit mechan. Eigenschaften erhält man nach dem Mahlen Polymergranulate mit unterschiedlichen Korngrößenverteilungen. Wichtig ist aber, daß in jedem Fall ein Füllmaterialgranulat zum Einsatz kommt das dem geforderten Quellverhalten entspricht.

### Herstellung von Platten und Formteilen

### Rezeptur / Eigenschaften der Reaktionsmasse:

Als optimal haben sich Mischungen von Granulaten mit unterschiedlichem Quellverhalten erwiesen.

Wird ausschließlich ein Granulat verwendet, das aus einem silanisierten ATH hergestellt wurde, so ist die Quellfähigkeit einer Granulatmischung teilweise zu gering, und das erfindungsgemäße Verfahren zur Herstellung von Kunststofformkörper funktioniert nicht optimal. Die Formteile können Fehlstellen aufweisen. Zudem ist die ausschließliche Verwendung von silanisiertem ATH häufig problematisch, da die Becken im Heiß-Kalt-Zyklus nach weniger als 1000 Zyklen reißen können.

Bei noch geringerem Quellverhalten verkeilen sich die Granulatkörner und die Gießform kann nicht mehr geschlossen werden. Gleichzeitig wird die Mischung nun quasi ausgepreßt und man erhält Bereiche mit unterschiedlichen Polymeranteilen.

Das für die Formteile wichtige Prüfkriterium des water whitening ist abhängig von den verwendeten Granulatfarben.

Im vorliegenden Verfahren wird die Aufgabenstellung einer guten Heiß-Kalt-Beständigkeit verbunden mit einem sehr guten water whitening so gelöst, daß ausschließlich ein Polymergranulat und kein loses ATH eingesetzt wird. Zudem werden bevorzugt zwei verschiedene Sorten von Granulaten verwendet:
a) eine Sorte an Granulat hergestellt aus beschichtetem ATH (s. Füllstoff 2)
b) eine Sorte an Granulat hergestellt aus unbeschichtetem Granulat (s. Füllstoff 1).

Werden bei eingesetzten 60 Gew.% Granulat mindestens 6 Gew.% der Granulatmenge der Sorte b) mit einer Korngrößenverteilung von 100 - 600 µm eingesetzt, so erhält man Formteile einer Heiß-Kalt-Beständigkeit von 3000 Zyklen und besser. Durch den hohen Anteil an Granulat der Sorte a) erhält man zudem ein Material mit einem sehr guten, d. h. geringen water whitening.

Als zweite Anforderung muß der Anteil an gut quellbarem Granulat so abgestimmt sein, daß eine Formgebung der Reaktionsmasse nach dem erfindungsgemäßen Verdrängungsverfahren möglich ist.

Weiterhin hat sich herausgestellt, daß ein Enddrehmoment von mindestens 1 Ncm sehr empfehlenswert ist, um einer Sedimentation deutlich entgegenzutreten.

Für dekorative Platten und Formteile verwendet man Polymergranulate unterschiedlicher Farben und Korngrößenverteilungen.
Feine Dekore: 3 - 7 unterschiedliche Farben, Korngrößenverteilung: 60 - 900 *m, bevorzugt 100 - 600 µm.s
Mittlere Dekore: 3 - 7 unterschiedliche Farben, Korngrößenverteilung: 60 - 2700 µm, bevorzugt 100 - 2500 µm.s
Grobe Dekore: 3 - 7 unterschiedliche Farben, Korngrößenverteilung: 60 - 8000 µm, bevorzugt 100 - 5000 µm.

Der Anteil an feinem Granulat (100 - 600 µm) überwiegt auch bei den mittelgroben und groben Dekoren und liegt in der Regel bei mindestens 40 Gew.% der Gesamtgranulatmenge.

Zuerst werden alle flüssigen Bestandteile gemischt. Anschließend wird das Polymergranulat zugegeben und die Masse entgast.

Das zugegebene Polymergranulat beginnt zu quellen und binnen kurzer Zeit liegt die Mischung als nicht mehr pumpbare Gießmasse vor, die nur noch mit einer speziell adaptierten Technologie verarbeitet werden kann. Entscheidend für das Funktionieren des Verdrängungsverfahren ist die Quellbarkeit des Polymergranulats, sowie die Endviskosität der Reaktionsmasse. Liegt ein quellbares Polymergranulat vor, so wird die Phasengrenze durch eindiffundierendes Monomeres angequollen/aufgeweicht. Dadurch sind die gequollenen Partikel in der Lage unter Druck gegeneinander zu gleiten und füllen nach dem Verdrängungsverfahren die dreidimensionale Formen vollständig und ohne die Ausbildung von Fließlinien aus.

Im Gegensatz dazu lassen sich nichtquellbare Partikel nach dem Verdrängungsverfahren nicht zu Formteilen verpressen. Die in der Regel scharfkantigen Partikel sind nicht in der Lage gegeneinander zu gleiten und verkeilen sich daher. Dadurch wird die Masse quasi ausgepreßt und der Füllstoff kann sich zum einen nicht gleichmäßig verteilen bzw. die Masse verteilt sich nicht gleichmäßig in der Form bzw. im Grenzfall schließt die Form nicht.
Formteile: Formteile werden nach einem Verdrängungsverfahren hergestellt. Die Form befindet sich in einer Presse. Die Presse wird geöffnet und die Masse wird als Klumpen in die Unterform (Matrize) gegeben. Die Oberform (Patrize) fährt nach unten und verdrängt die Masse und bildet so die dreidimensionale Form. Die Vorgehensweise erfordert spezielle Dichtsysteme. Matrize und Patrize haben im Bereich der Dichtung nur einen Spalt von wenigen Zehntel Millimeter. Als Dichtungsmaterial wird luftdurchlässiger Filz verwendet, so daß die Luft allseitig entweichen kann. Gehärtet wird durch thermische Initiierung.
Platten: Die nichtfließfähige Masse wird mittels eines Doppelbandes in Form gebracht; in eine Presse eingezogen und unter Druck und Temperatur polymerisiert.

### Beispiele:

### Herstellung des Polymergranulats:

### Beispiel 1

25,68 kg Acrylsirup (Feststoffgehalt 15%, Viskosität 40 mPa*s), 1 kg TRIM, 70 g Stearinsäure, 90 g BCHPC, 160 g LP werden in einem Intensivmischer ca. 2 min miteinander vermischt. Dann werden bei laufendem Rührwerk 73 kg ATH (d₅₀ = 35µm) zugegeben.

Die Pigmente werden in Form einer Farbpaste: z.B.: 2 kg Schwarzpaste zugegeben.

Die Masse wird weitere 3 min gemischt und gleichzeitig entgast.

Nach Entnahme aus dem Mischer wird die fließfähige Masse in einer Formenpresse zu ca. 6 mm dicken Fladen verpreßt und bei einer Temperatur von 90°C polymerisiert. Nach 35 min wird der Fladen entnommen. Nach dem Abkühlen wird der Fladen in einem Walzenbrecher grob zerkleinert und in einer Schneidmühle fein zerkleinert und schließlich mit einem Siebturm in die gewünschten Kornfraktionen aufgetrennt.

### Beispiel 2:

Es wird ein silanisiertes ATH verwendet, das mit 0,2 Gew.% Methacrylsilan beschichtet ist.

### Ansonsten s. Beispiel 1

### Beispiel 3:

23,68 kg Acrylsirup (Feststoffgehalt 15%, Viskosität 40 mPa*s), 3 kg TRIM, 70 g Stearinsäure, 90g BCHPC, 160 g LP werden in einem Intensivmischer ca. 2 min miteinander vermischt. Dann werden bei laufendem Rührwerk 73 kg ATH ( d₅₀ = 35µm) zugegeben.

Die Pigmente werden in Form einer Farbpaste: z.B. 2 kg Schwarzpaste zugegeben.

Die Masse wird weitere 3 min gemischt und gleichzeitig entgast.

### Ansonsten s. Beispiel 1.

### Beispiel 4:

Es wird ein silanisiertes ATH verwendet, das mit 0,2 Gew.% Methacrylsilan beschichtet ist.

### Ansonsten s. Beispiel 3

### Beispiel 5:

38,6 kg Acrylsirup (Feststoffgehalt 15%, Viskosität 40 mPa*s), 1,05 kg TRIM, 100 g Stearinsäure, 100 g BCHPC, 150 g LP werden in einem Intensivmischer ca. 2 min miteinander vermischt. Dann werden bei laufendem Rührwerk 60 kg ATH (d₅₀ = 35 µm) zugegeben.

Die Pigmente werden in Form einer Farbpaste: z.B. 2 kg Schwarzpaste zugegeben. Die Masse wird weitere 3 min gemischt und gleichzeitig entgast.

### Ansonsten s. Beispiel 1

### Beispiel 6:

19,07 kg Acrylsirup (Feststoffgehalt 15%, Viskosität 40 mPa*s), 745 g TRIM, 50 g Stearinsäure, 67 g BCHPC, 118 g LP werden in einem Intensivmischer ca. 2 min miteinander vermischt. Dann werden bei laufendem Rührwerk 80 kg ATH (d₅₀ = 35 µm) zugegeben.

Die Pigmente werden in Form einer Farbpaste: z.B. 2 kg Schwarzpaste zugegeben. Die Masse wird weitere 5 min gemischt und gleichzeitig entgast.

### Ansonsten s. Beispiel 1

**Tabelle 1**

| Beispiel | Anfangsdrehmoment | Drehmoment nach 25 min | Quellfaktor | Enddrehmoment |
|---|---|---|---|---|
| 7 | 0,7 | 2,9 | 4,2 | 3,8 |
| 8 | 0,45 | 1,24 | 2,7 | 1,3 |
| 9 | 0,63 | 1,53 | 2,4 | 1,2 |
| 10 | 0,42 | 1,35 | 3,3 | 1,3 |

### Herstellung eines Acrylformteils:

### Beispiel 7:

38,6 kg Acrylsirup (Feststoffgehalt 15%, Viskosität 40 mPa*s), 0,9 kg TRIM, 100 g Stearinsäure, 150g BCHPC, 250 g LP werden in einem Intensivmischer ca. 2 min miteinander vermischt. Dann werden bei laufendem Rührwerk 60 kg einer schwarzen UNI-Mischung (s. Beispiel 1) mit einer Korngrößenverteilung von 100 - 600 µm zugegeben.

Die Masse wird weitere 3 min gemischt und gleichzeitig entgast.

Die Entleerung des Mischers erfolgt über eine Bodenklappe. Man läßt die ganze Mischung mindestens eine Stunde quellen. Dann werden aus dem Behälter ca. 3,5 kg entnommen und als Klumpen in eine offene Form eingebracht. Die Form hat eine Temperatur von 60°C. Die Form wird mittels einer Hyraulik geschlossen und das Temperaturprogramm für die thermisch initiierte Polymerisation gestartet. Nach 35 min wird entformt.

Das Ergebnis ist ein schwarzes Handwaschbecken. Da ein feines Granulat verwendet wurde ist das Becken Uni-Farben. Granulatstrukturen sind nicht zu erkennen.
- Heiß-Kalt-Zyklus (3 min 87 °C; 3 min 21 °C):: > 3000 Zyklen ohne Rißbildung.
- water whitening:: gut bis sehr gut

### Beispiel 8:

38,6 kg Acrylsirup (Feststoffgehalt 15%, Viskosität 40 mPa*s), 0,9 kg TRIM, 100 g Stearinsäure, 150g BCHPC, 250 g LP werden in einem Intensivmischer ca. 2 min miteinander vermischt. Dann werden bei laufendem Rührwerk 40 kg Granulat (unpigmentiert, Bsp. 2), 16,25 kg (weiß, Bsp. 1), 3,75 kg Granulat (schwarz, Bsp. 2) mit einer Korngrößenverteilung von 100 - 600 µm zugegeben. Die Masse wird weitere 3 min gemischt und gleichzeitig entgast.

### Weitere Vorgehensweise: s. Beispiel 7

Das Ergebnis ist ein graues granitähnliches Handwaschbecken.
- Heiß-Kalt-Zyklus (3 min 87 °C; 3 min 21 °C):: > 3000 Zyklen ohne Rißbildung.
- water whitening:: gut.

### Beispiel 9:

38,6 kg Acrylsirup (Feststoffgehalt 15%, Viskosität 40 mPa*s), 0,9 kg TRIM, 100 g Stearinsäure, 150g BCHPC, 250 g LP werden in einem Intensivmischer ca. 2 min miteinander vermischt. Dann werden bei laufendem Rührwerk 20 kg Granulat (unpigmentiert, Bsp. 2), 7,00 kg (weiß, Bsp. 1), 32 kg Granulat (schwarz, Bsp. 2) mit einer Korngrößenverteilung von 100 - 600 µm sowie 1 kg Granulat (weiß, Bsp 1) mit einer Korngrößenverteilung von 0,6 - 1,2 zugegeben. Die Masse wird weitere 3 min gemischt und gleichzeitig entgast.

### Weitere Vorgehensweise: s. Beispiel 7

Das Ergebnis ist ein fast schwarzes granitähnliches Handwaschbecken.
- Heiß-Kalt-Zyklus (3 min 87 °C; 3 min 21 °C):: > 3000 Zyklen ohne Rißbildung.
- water whitening:: sehr gut

### Beispiel 10:

38,6 kg Acrylsirup (Feststoffgehalt 15%, Viskosität 40 mPa*s), 0,9 kg TRIM, 100 g Stearinsäure, 150g BCHPC, 250 g LP werden in einem Intensivmischer ca. 2 min miteinander vermischt. Dann wird bei laufendem Rührwerk das Granulat zugegeben und zwar wie folgt:
40 kg Granulat (unpigmentiert, Bsp. 2; 0,1 - 0,6 mm)
7 kg Granulat (unpigmentiert, Bsp. 2, 2,5 - 5 mm)
5 kg Granulat (weiß, Bsp 1, 0,1 - 0,6mm)
1 kg Granulat (weiß, Bsp. 1, 0,6 - 1,2mm)
2 kg Granulat (weiß, Bsp. 1, 1,2 - 2,5mm)
1 kg Granulat (schwarz, Bsp. 2, 0,1 - 0,6mm)
1 kg Granulat (schwarz, Bsp. 2, 0,6 - 1,2mm)
2 kg Granulat ( schwarz, Bsp. 2, 1,2 - 2,5mm)
1 kg Granulat (blau, Bsp 1, 0,1 - 0,6mm)

Die Masse wird weitere 5 min gemischt und gleichzeitig entgast.

### Weitere Vorgehensweise: s. Beispiel 7

Das Ergebnis ist ein graues, grobstrukturiertes, granitähnliches Handwaschbecken.
- Heiß-Kalt-Zyklus (3 min 87 °C; 3 min 21 °C):: > 3000 Zyklen ohne Rißbildung.
- water whitening:: gut

### Besipiel 11:

36,73 kg Acrylsirup (Feststoffgehalt 15 Gew.%, Viskosität 40 mPas), 0,8 kg TRIM, 105 g Stearinsäure, 135 g BCHPC, 230 g LP werden in einem Intensivmischer ca. 2 min miteinander vermischt. Dann werden bei laufendem Rührwerk 2 kg Cristobalit-Feinstmehl (d50 = 3 µm, Silangehalt 0,9 Gew.%), 40 kg Granulat (unpigmentiert Bsp. 2), 16,25 kg Granulat (weiß, Bsp. 1), 3,75 kg Granulat (schwarz, Bsp.2) mit einer Korngrößenverteilung von 100 bis 600 µm zugegeben. Die Masse wird weitere 3 min gemischt und gleichzeitig entgast.

Die weitere Vorgehensweise entspricht Beispiel 7.

Das Ergebnis ist ein graues, granitähnliches Handwaschbecken.
- Heiß-Kalt-Zyklus (3 min 87 °C; 3 min 21 °C):: > 3000 Zyklen ohne Rißbildung.
- water whitening:: sehr gut

Beispiel 11 belegt im Vergleich mit den Beispielen 7 bis 10 den Effekt der Zugabe des Zuschlagstoffes Cristobali-Feinstmehl zu der Reaktionsmasse zur Bildung der Polymerphase:

Bei einer Beurteilung der Handwaschbecken nach jeweils 1000 Heiß-Kalt-Zyklen wird das Formteil im Bereich des Auslaufs, wo das water whitening am stärksten auftritt in zwei Teile gesägt und die Sägeschnittfläche feingeschliffen.

Es wird dann visuell beurteilt, wie weit die Materialaufhellung durch water whitening in die Tiefe des Materials eingedrungen ist.

Im Ergebnis wurden folgende Tiefen gefunden:

| | |
|---|---|
| Beispiel 7 | 1,5 mm |
| Beispiele 8 - 10 | ca. 0,5 mm |
| Beispiel 11 | 0,2 mm |

Dies bedeutet, daß sich der water whitening Effekt bei dem Formteil gemäß Beipiel 11 durch Schleifen wieder entfernen läßt. Bei den anderen Formteilen gemäß den Beispielen 7 bis 10 ist die Tiefenwirkung des water whitening Effekts dafür zu groß.

## Patentansprüche

1. Kunststofformkörper, umfassend eine aus einer aushärtbaren Reaktionsmasse gebildeten Polymerphase und ein darin eingelagertes partikelförmiges Füllmaterial,
wobei das Füllmaterial ein mit einem anorganischen Füllstoff gefülltes Harzmaterial umfaßt, dadurch gekennzeichnet, daß
die Polymerphase bis zu 5 Gew.%, bezogen auf den Kunststofformkörper, an losen anorganischen Zuschlagstoffpartikeln umfaßt,
daß das partikelförmige Füllmaterial in der aushärtbaren Reaktionsmasse gequollen ist, bis deren Mischung nicht unter gieß fähig ist,
daß das gefüllte Harzmaterial einen Anteil an anorganischem Füllstoff im Bereich von 50 bis 80 Gew.% mit einer mittleren Korngröße von 5 bis 100 µm aufweist, und daß das Füllmaterial eine Korngröße im Bereich von 60 bis 8000 µm aufweist und in einem Anteil von 30 bis 75 Gew.% in dem Kunststofformkörper enthalten ist.

2. Kunststofformkörper nach Anspruch 1, dadurch gekennzeichnet, daß das partikelförmige Füllmaterial in der aushärtbaren Reaktionsmasse quellbar ist, derart, daß eine Prüfrezeptur aus 60 Gew.% aushärtbarer Reaktionsmasse und 40 Gew.% des partikelförmigen Füllmaterials einen Quellfaktor ≥ 2 aufweist.

3. Kunststofformkörper nach einem der Ansprüche 1 oder 2, dadurch gekennzeichnet, daß die aushärtbare Reaktionsmasse einen ersten Monomer/Präpolymer-Sirup umfaßt.

4. Kunststofformkörper nach Anspruch 3, dadurch gekennzeichnet, daß der Gehalt des ersten Sirups an Präpolymer 5 bis 30 Gew.% beträgt.

5. Kunststofformkörper nach Anspruch 3 oder 4, dadurch gekennzeichnet, daß die Viskosität des ersten Sirups auf 20 bis 300 mPas eingestellt ist.

6. Kunststofformkörper nach einem der Ansprüche 3 bis 5, dadurch gekennzeichnet, daß das Präpolymer des ersten Sirups ein mittleres Molekulargewicht von 20.000 bis 300.000 Da aufweist.

7. Kunststofformkörper nach einem der Ansprüche 3 bis 6, dadurch gekennzeichnet, daß der erste Sirup ein radikalisch polymerisierbares Monomer, insbesondere vom Acrylattyp, und ein Präpolymer als Homo- oder Copolymer des Monomeren umfaßt.

8. Kunststofformkörper nach einem der Ansprüche 3 bis 6, dadurch gekennzeichnet, daß der erste Sirup Polyesterharz umfaßt.

9. Kunststofformkörper nach einem der Ansprüche 3 bis 8, dadurch gekennzeichnet, daß der erste Sirup einen Vernetzer in einer Menge von 0,5 bis 5 Gew.% (bezogen auf das Formkörpergewicht), insbesondere ausgewählt aus der Reihe der bi- oder polyfunktionalen Acrylatvernetzer, enthält.

10. Kunststofformkörper nach einem der Ansprüche 3 bis 9, dadurch gekennzeichnet, daß der erste Sirup ein einstufiges oder mehrstufiges, insbesondere zweistufiges Peroxidinitiatorsystem umfaßt.

11. Kunststofformkörper nach einem der Ansprüche 3 bis 10, dadurch gekennzeichnet, daß der erste Sirup ein Trennmittel in einer Menge von 0,05 bis 0,3 Gew.%, bezogen auf das Gesamtgewicht des Formkörpers, insbesondere in Form von Stearinsäure, umfaßt.

12. Kunststofformkörper nach einem der Ansprüche 1 bis 11, dadurch gekennzeichnet, daß das Harzmaterial des Füllmaterials aus einem zweiten Monomer/Präpolymer-Sirup hergestellt ist, welcher einen Anteil von 5 bis 30 Gew.% Präpolymer mit einem mittleren Molekulargewicht im Bereich von 20.000 bis 300.000 Da enthält.

13. Kunststofformkörper nach Anspruch 12, dadurch gekennzeichnet, daß die Viskosität des zweiten Monomer/Präpolymer-Sirups auf 20 bis 300 mPas eingestellt ist.

14. Kunststofformkörper nach einem der Ansprüche 1 bis 13, dadurch gekennzeichnet, daß der anorganische Füllstoff ein granularer und/oder faserförmiger Füllstoff ist.

15. Kunststofformkörper nach Anspruch 14, dadurch gekennzeichnet, daß der Füllstoff einen silikatischen Füllstoff, insbesondere Cristobalit, Quarz, oder Wollastonit, Aluminiumoxid und/oder Aluminiumoxidtrihydrat umfaßt.

16. Kunststofformkörper nach Anspruch 15, dadurch gekennzeichnet, daß der Füllstoff Aluminiumoxidtrihydrat umfaßt, welches mit einem Silan in einer Menge von 0,04 bis 1 Gew.%, bezogen auf die Gewicht des Aluminiumoxidtrihydrats, beschichtet ist.

17. Kunststofformkörper nach einem der Ansprüche 12 bis 16, dadurch gekennzeichnet, daß der zweite Monomer/PräpolymerSirup einen Vernetzer mit einem Anteil von 0,5 bis 5 Gew.%, bezogen auf das Gesamtgewicht des Formkörpers, enthält.

18. Kunststofformkörper nach einem der Ansprüche 12 bis 17, dadurch gekennzeichnet, daß der zweite Monomer/Präpolymer-Sirup ein radikalisch polymerisierbares Monomer, insbesondere vom Acrylattyp und ein Präpolymer in Form eines Homo- und/oder Copolymers des Monomers umfaßt.

19. Kunststofformkörper nach einem der Ansprüche 12 bis 17, dadurch gekennzeichnet, daß der zweite Sirup ein Polyesterharz umfaßt.

20. Kunststofformkörper nach Anspruch 18 oder 19, dadurch gekennzeichnet, daß der zweite Monomer/Präpolymer-Sirup einen Vernetzer enthält, welcher aus bi- oder polyfunktionellen Acrylatvernetzern ausgewählt ist.

21. Kunststofformkörper nach einem der Ansprüche 12 bis 20, dadurch gekennzeichnet, daß der zweite Monomer/Präpolymer-Sirup ein einstufiges oder mehrstufiges, insbesondere ein zweistufiges Initiatorsystem umfaßt.

22. Kunststofformkörper nach einem der Ansprüche 12 bis 21, dadurch gekennzeichnet, daß der zweite Monomer/Präpolymer-Sirup ein Trennmittel, vorzugsweise in Form von Stearinsäure, in einer Menge von 0,05 bis 0,3 Gew.% (bezogen auf das Gewicht des Formkörpers) umfaßt.

23. Kunststofformkörper nach einem der voranstehenden Ansprüchen, dadurch gekennzeichnet, daß das partikelförmige Füllmaterial eine Mischung verschiedener granularer Füllmaterialien ist.

24. Kunststofformkörper nach einem der voranstehenden Ansprüchen, dadurch gekennzeichnet, daß das Füllmaterial ein Enddrehmoment von > 1 Ncm aufweist.

25. Kunststofformkörper nach einem der voranstehenden Ansprüchen, dadurch gekennzeichnet, daß der Gehalt an anorganischem Füllstoff in dem Kunststofformkörper insgesamt 30 bis 55 Gew.% beträgt.

26. Verfahren zur Herstellung von Kunststofformkörpern gemäß einem der Ansprüche 1 bis 25, wobei eine Mischung einer aushärtbaren Reaktionsmasse zur Bildung einer Polymerphase mit einem partikelförmigen Füllmaterial hergestellt und zum Aushärten in eine Form gegeben wird, dadurch gekennzeichnet, daß die aushärtbare Reaktionsmasse im wesentlichen frei von losen anorganischen Füllstoffen verwendet wird,
daß als Füllmaterial ein in der Reaktionsmasse quellbares Füllmaterial, welches ein mit einem anorganischen Füllstoff gefülltes Harzmaterial umfaßt, verwendet wird, wobei der Anteil der anorganischen Füllstoffe in dem Füllmaterial 50 bis 80 Gew.% beträgt und wobei die Partikel des anorganischen Füllstoffs eine mittlere Korngröße von ca. 5 bis 100 µm aufweisen und das Füllmaterial eine Korngröße von ca. 60 bis ca. 8000 µm aufweist und so dosiert wird,
daß es in dem Kunststofformkörper mit einem Anteil von ca. 30 bis ca. 75 Gew.% enthalten ist,
daß das Füllmaterial in der aushärtbaren Reaktionsmasse solange quellen gelassen wird, bis die Mischung nicht mehr gießfähig ist,
daß die Mischung zum Aushärten in eine der von in einer Presse angeordneten Formhälften gegeben, die Form geschlossen und ein vorgegebener Preßdruck auf die Form angewandt und die Mischung in der geschlossenen Form thermisch ausgehärtet wird.

## Claims

1. Plastics moulding, comprising a polymer phase formed from a curable reaction mass and a particulate filling material embedded therein,
wherein the filling material contains a resin material filled with an inorganic filler,
characterised in that the polymer phase contains up to 5 wt %, referred to the plastics moulding, of loose inorganic loading particles,
that the particulate filling material is swollen in the curable reaction mass until the mixture thereof is no longer pourable,
that the filled resin material comprises a content of inorganic filler in the range from 50 to 80 wt % with an average particle size of 5 to 100 µm, and
that the filling material has a particle size in the range from 60 to 8000 µm and is contained in the plastics moulding in a proportion of 30 to 75 wt %.

2. Plastics moulding according to claim 1, characterised in that the particulate filling material is swellable in the curable reaction mass in such a way that a test formulation of 60 wt % of curable reaction mass and 40 wt % of the particulate filling material has a swell factor ≥ 2.

3. Plastics moulding according to either one of claims 1 or 2, characterised in that the curable reaction mass contains a first monomer/pre-polymer syrup.

4. Plastics moulding according to claim 3, characterised in that the pre-polymer content of the first syrup comes to 5 to 30 wt %.

5. Plastics moulding according to claim 3 or 4,
characterised in that the viscosity of the first syrup is set to 20 to 300 mPas.

6. Plastics moulding according to any one of claims 3 to 5, characterised in that the pre-polymer of the first syrup has an average molecular weight of 20 000 to 300 000 Da.

7. Plastics moulding according to any one of claims 3 to 6, characterised in that the first syrup contains a radically polymerisable monomer, in particular of the acrylate type, and a pre-polymer as homo- or copolymer of the monomer.

8. Plastics moulding according to any one of claims 3 to 6, characterised in that the first syrup contains polyester resin.

9. Plastics moulding according to any one of claims 3 to 8, characterised in that the first syrup contains a crosslinking agent in an amount of 0.5 to 5 wt % (referred to the moulding weight), in particular selected from the series of the bi- or polyfunctional acrylate crosslinking agents.

10. Plastics moulding according to any one of claims 3 to 9, characterised in that the first syrup contains a single-stage or multi-stage, in particular two-stage peroxide initiator system.

11. Plastics moulding according to any one of claims 3 to 10, characterised in that the first syrup contains a mould release agent in an amount of 0.05 to 0.3 wt %, referred to the total weight of the moulding, in particular in the form of stearic acid.

12. Plastics moulding according to any one of claims 1 to 11, characterised in that the resin material of the filling material is produced from a second monomer/pre-polymer syrup which contains a proportion of 5 to 30 wt % pre-polymer with an average molecular weight in the range from 20 000 to 300 000 Da.

13. Plastics moulding according to claim 12, characterised in that the viscosity of the second monomer/pre-polymer syrup is set to 20 to 300 mPas.

14. Plastics moulding according to any one of claims 1 to 13, characterised in that the inorganic filler is a granular and/or fibrous filler.

15. Plastics moulding according to claim 14, characterised in that the filler contains a silicate filler, in particular cristobalite, quartz or wollastonite, aluminium oxide and/or aluminium oxide trihydrate.

16. Plastics moulding according to claim 15, characterised in that the filler contains aluminium oxide trihydrate which is coated with a silane in an amount of 0.04 to 1 wt %, referred to the weight of the aluminium oxide trihydrate.

17. Plastics moulding according to any one of claims 12 to 16, characterised in that the second monomer/pre-polymer syrup contains a crosslinking agent with a content of 0.5 to 5 wt %, referred to the total weight of the moulding.

18. Plastics moulding according to any one of claims 12 to 17, characterised in that the second monomer/pre-polymer syrup contains a radically polymerisable monomer, in particular of the acrylate type, and a pre-polymer in the form of a homo- and/or copolymer of the monomer.

19. Plastics moulding according to any one of claims 12 to 17, characterised in that the second syrup contains a polyester resin.

20. Plastics moulding according to claim 18 or 19,
characterised in that the second monomer/pre-polymer syrup contains a crosslinking agent which is selected from bi- or polyfunctional acrylate crosslinking agents.

21. Plastics moulding according to any one of claims 12 to 20, characterised in that the second monomer/pre-polymer syrup contains a single-stage or multi-stage, in particular a two-stage initiator system.

22. Plastics moulding according to any one of claims 12 to 21, characterised in that the second monomer/pre-polymer syrup contains a mould release agent, preferably in the form of stearic acid, in an amount of 0.05 to 0.3 wt % (referred to the weight of the moulding).

23. Plastics moulding according to any one of the preceding claims, characterised in that the particulate filling material is a mixture of various granular filling materials.

24. Plastics moulding according to any one of the preceding claims, characterised in that the filling material has a final torque of > 1 Ncm.

25. Plastics moulding according to any one of the preceding claims, characterised in that the content of inorganic filler in the plastics moulding amounts in total to 30 to 55 wt %.

26. Process for producing plastics mouldings according to any one of claims 1 to 25, wherein a mixture of a curable reaction mass for forming a polymer phase with a particulate filling material is produced and is placed in a mould for the curing,
characterised in that the curable reaction mass is used substantially free from loose inorganic fillers,
that there is used as filling material a filling material swellable in the reaction mass and containing a resin material filled with an inorganic filler, wherein the content of the inorganic fillers in the filling material comes to 50 to 80 wt % and wherein the particles of the inorganic filler exhibit an average particle size of approx. 5 to 100 µm and the filling material exhibits a particle size of approx. 60 to approx. 8000 µm and is so metered that it is contained in the plastics moulding in a content of approx. 30 to approx. 75 wt %,
that the filling material is allowed to swell in the curable reaction mass until such time as the mixture is no longer pourable,
that the mixture is placed for curing in one of the mould halves disposed in a press, the mould is closed and a predetermined compressive force is applied to the mould and the mixture is cured thermally in the closed mould.

## Revendications

1. Corps moulé en matière plastique comprenant une phase polymère constituée par une masse réactionnelle durcissable et une matière de charge particulaire incorporée dans celle-ci,
où la matière de charge comprend une matière résinique chargée avec une charge inorganique, caractérisé en ce que
la phase polymère comprend jusqu'à 5 % en masse, par rapport au corps moulé en matière plastique, de particules d'additif inorganique en vrac,
en ce que la matière de charge particulaire est gonflée dans la masse réactionnelle durcissable jusqu'à ce que leur mélange ne soit plus capable de couler,
en ce que la matière résinique chargée présente une proportion de charge inorganique dans le domaine de 50 à 80 % en masse avec une granulométrie moyenne de 5 à 100 µm, et
en ce que la matière de charge présente une granulométrie dans le domaine de 60 à 8 000 µm et est contenue dans le corps moulé en matière plastique en une proportion de 30 à 75 % en masse.

2. Corps moulé en matière plastique selon la revendication 1, caractérisé en ce que la matière de charge particulaire est gonflable dans la masse réactionnelle durcissable de telle manière qu'une formulation d'essai constituée par 60 % en masse de masse réactionnelle durcissable et 40 % en masse de matière de charge particulaire présente un facteur de gonflement ≥ 2.

3. Corps moulé en matière plastique selon l'une des revendications 1 ou 2, caractérisé en ce que la masse réactionnelle durcissable comprend un premier sirop de monomère/prépolymère.

4. Corps moulé en matière plastique selon la revendication 3, caractérisé en ce que la teneur du premier sirop en prépolymère est de 5 à 30 % en masse.

5. Corps moulé en matière plastique selon la revendication 3 ou 4, caractérisé en ce que la viscosité du premier sirop est ajustée à 20 à 300 mPa.s.

6. Corps moulé en matière plastique selon l'une des revendications 3 à 5, caractérisé en ce que le prépolymère du premier sirop présente une masse moléculaire moyenne de 20 000 à 300 000 Da.

7. Corps moulé en matière plastique selon l'une des revendications 3 à 6, caractérisé en ce que le premier sirop comprend un monomère polymérisable par voie radicalaire, en particulier du type acrylate, et un prépolymère sous forme d'homo- ou copolymère du monomère.

8. Corps moulé en matière plastique selon l'une des revendications 3 à 6, caractérisé en ce que le premier sirop comprend une résine de polyester.

9. Corps moulé en matière plastique selon l'une des revendications 3 à 8, caractérisé en ce que le premier sirop contient un réticulant en une quantité de 0,5 à 5 % en masse (par rapport à la masse du corps moulé), en particulier choisi dans la série des réticulants acrylates bi- ou polyfonctionnels.

10. Corps moulé en matière plastique selon l'une des revendications 3 à 9, caractérisé en ce que le premier sirop comprend un système initiateur peroxydique à une étape ou à plusieurs étapes, en particulier à deux étapes.

11. Corps moulé en matière plastique selon l'une des revendications 3 à 10, caractérisé en ce que le premier sirop comprend un agent de démoulage en une quantité de 0,05 à 0,3 % en masse par rapport à la masse totale du corps moulé, en particulier sous forme d'acide stéarique.

12. Corps moulé en matière plastique selon l'une des revendications 1 à 11, caractérisé en ce que la matière résinique de la matière de charge est préparée à partir d'un second sirop de monomère/prépolymère qui contient une proportion de 5 à 30 % en masse de prépolymère ayant une masse moléculaire moyenne dans le domaine de 20 000 à 300 000 Da.

13. Corps moulé en matière plastique selon la revendication 12, caractérisé en ce que la viscosité du deuxième sirop de monomère/prépolymère est ajustée à 20 à 300 mPa.s.

14. Corps moulé en matière plastique selon l'une des revendications 1 à 3, caractérisé en ce que la charge inorganique est une charge granulaire et/ou fibreuse.

15. Corps moulé en matière plastique selon la revendication 14, caractérisé en ce que la charge comprend une charge de type silicate, en particulier la cristobalite, le quartz ou la wollastonite, l'oxyde d'aluminium et/ou l'oxyde d'aluminium trihydraté.

16. Corps moulé en matière plastique selon la revendication 15, caractérisé en ce que la charge comprend de l'oxyde d'aluminium trihydraté qui est revêtu d'un silane en une quantité de 0,04 à 1 % en masse par rapport à la masse de l'oxyde d'aluminium trihydraté.

17. Corps moulé en matière plastique selon l'une des revendications 12 à 16, caractérisé en ce que le deuxième sirop de monomère/prépolymère contient un réticulant en une proportion de 0,5 à 5 % en masse par rapport à la masse totale du corps moulé.

18. Corps moulé en matière plastique selon l'une des revendications 12 à 17, caractérisé en ce que le deuxième sirop de monomère/prépolymère comprend un monomère polymérisable par voie radicalaire, en particulier de type acrylate et un prépolymère sous forme d'un homo- et/ou copolymère du monomère.

19. Corps moulé en matière plastique selon l'une des revendications 12 à 17, caractérisé en ce que le deuxième sirop comprend une résine de polyester.

20. Corps moulé en matière plastique selon la revendication 18 ou 19, caractérisé en ce que le deuxième sirop de monomère/prépolymère contient un réticulant qui est choisi parmi les réticulants d'acrylates bi- ou polyfonctionnels.

21. Corps moulé en matière plastique selon l'une des revendications 12 à 20, caractérisé en ce que le deuxième sirop de monomère/prépolymère comprend un système initiateur à une étape ou à plusieurs étapes, en particulier à deux étapes.

22. Corps moulé en matière plastique selon l'une des revendications 12 à 21, caractérisé en ce que le deuxième sirop de monomère/prépolymère comprend un agent de démoulage, de préférence sous forme d'acide stéarique, en une quantité de 0,05 à 0,3 % en masse (par rapport à la masse du corps moulé).

23. Corps moulé en matière plastique selon l'une des revendications précédentes, caractérisé en ce que la matière de charge particulaire est un mélange de différentes matières de charge granulaires.

24. Corps moulé en matière plastique selon l'une des revendications précédentes, caractérisé en ce que la matière de charge présente un couple final > 1 Ncm.

25. Corps moulé en matière plastique selon l'une des revendications précédentes, caractérisé en ce que la teneur en charge inorganique du corps moulé en matière plastique est au total de 30 à 55 % en masse.

26. Procédé de fabrication de corps moulés en matière plastique selon l'une des revendications 1 à 25 où un mélange d'une masse réactionnelle durcissable pour la formation d'une phase polymère avec une matière de charge particulaire est préparé et est introduit dans un moule pour le durcissement, caractérisé en ce que la masse réactionnelle durcissable est utilisée sensiblement exempte de charges inorganiques en vrac, en ce que l'on utilise comme matière de charge une matière de charge capable de gonfler dans la masse réactionnelle qui comprend une matière résinique chargée avec une charge inorganique, où la proportion des charges inorganiques dans la matière de charge est de 50 à 80 % en masse et où les particules de la charge inorganique présentent une granulométrie moyenne d'environ 5 à 100 µm et la matière de charge présente une granulométrie d'environ 60 à environ 8 000 µm et est dosée de manière qu'elle soit contenue dans le corps moulé en matière plastique en une proportion d'environ 30 à environ 75 % en masse,
en ce que la matière de charge est mise à gonfler dans la masse réactionnelle durcissable jusqu'à ce que le mélange ne soit plus capable de couler,
en ce que le mélange est introduit pour le durcissement dans l'une des moitiés de moule disposées dans une presse, le moule est fermé et une pression de compression prédéterminée est appliquée sur le moule, et le mélange est durci thermiquement dans le moule fermé.
